# EUROPEAN PATENT APPLICATION

(11) **EP 2 937 986 A1**
(43) Date of publication of application: **28.10.2015**
(21) Application number: 14275094.2
(22) Date of filing: 25.04.2014
(51) Int. Cl.: H02M 7/49

(54) **A control module**

(71) Applicant: ALSTOM Technology Ltd, 5400 Baden (CH)
(72) Inventor: OUTRAM, John Lewis, Stone Staffordshire ST15 8YD (GB); STANDEN, John Paul, Woodford Halse Northamptonshire NN11 3TT (GB)
(74) Representative: Potter Clarkson LLP

(57) **Abstract**

A control module (40), for controlling a chain-link component (26, 28) of a converter (10), comprises two controllers (42, 44). Each controller (42, 44) is configured to selectively control a chain-link component (26, 28) in accordance with a control program that is stored in the said controller (42, 44). The control module (40) is configured to replace the control program stored in one of the controllers (42, 44) with a replacement control program while the other of the controllers (42, 44) is controlling the chain-link component (26, 28).

## Description

This invention relates to a control module for controlling a chain-link component of a converter, to a chain-link module, and to such a converter.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometre of the lines and/or cables. Conversion from AC to DC thus becomes cost-effective when power needs to be transmitted over a long distance.

The conversion between AC power and DC power is also utilized in power transmission networks where it is necessary to interconnect AC electrical networks operating at different frequencies. In any such power transmission network, converters are required at each interface between AC and DC power to effect the required conversion, and one such form of converter is a voltage source converter.

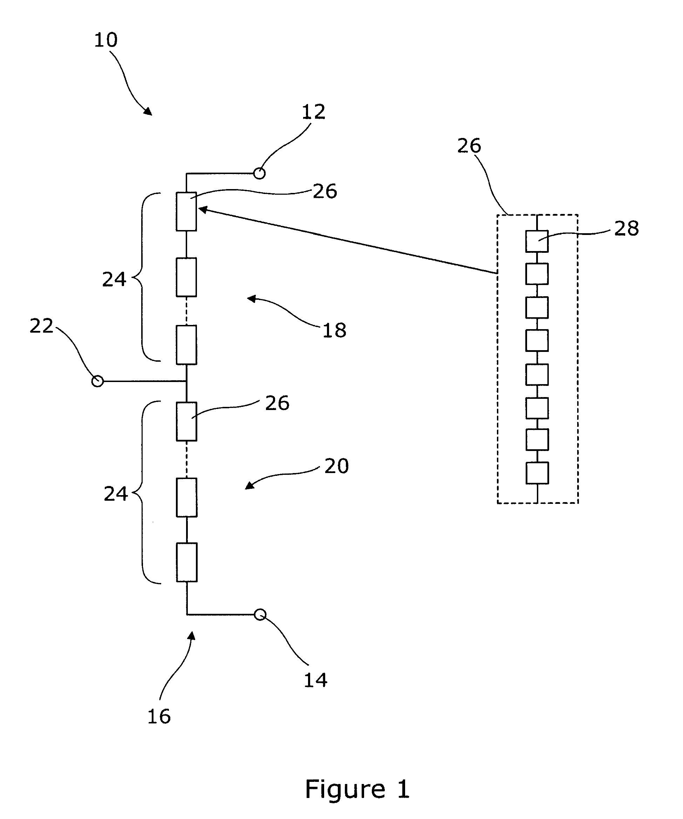

A typical voltage source converter is shown schematically in Figure 1. The voltage source converter 10 includes first and second DC terminals 12, 14 between which extends a converter limb 16. Other voltage source converters may include more than one converter limb 16 and, in particular, may include three converter limbs each of which corresponds to a given phase of a three-phase electrical power system.

The converter limb 16 includes first and second limb portions 18, 20 which are separated by an alternating current (AC) terminal 22.

In use the first and second DC terminals 12, 14 are respectively connected to positive and negative terminals of a DC network, and the AC terminal 22 is connected to an AC network.

Each limb portion 18, 20 includes a chain-link converter 24 which extends between the AC terminal 22 and a corresponding one of the first or the second DC terminal 12, 14. Each chain-link converter 24 includes a plurality of series connected chain-link modules 26, and each chain-link module 26 in turn includes a plurality of, e.g. eight, series connected chain-link sub-modules 28.

Each chain-link sub-module 28 includes a number of switching elements (not shown) which are connected in parallel with an energy storage device in the form of, e.g. a capacitor. Each switching element may include a semiconductor device in the form of, e.g. an Insulated Gate Bipolar Transistor (IGBT), which is connected in anti-parallel with a diode although it is possible to use other semiconductor devices.

Switching of the switching elements selectively directs current through the capacitor or causes current to bypass the capacitor such that each sub-module 28 is selectively able to provide a voltage. In this manner it is possible to build up a combined voltage across each chain-link module 26, via the insertion of the capacitors of multiple chain-link sub-modules 28 (with each sub-module 28 providing its own voltage), which is higher than the voltage available from each individual sub-module 28.

Moreover, it is similarly possible to build up a combined voltage across each chain-link converter 24 by combining the individual voltage available from each chain-link module 26.

Accordingly, each of the chain-link modules 26 and its associated chain-link sub-modules 28 work together to permit the chain-link converter 24 to provide a stepped variable voltage source. This permits the generation of a voltage waveform across each chain-link converter 24 using a step-wise approximation. Operation of each chain-link converter 24 in this manner can be used to generate an AC voltage waveform at the AC terminal 22, and thereby enable the voltage source converter 10 to provide the aforementioned power transfer functionality between the AC and DC networks.

Switching of the switching elements within the chain-link sub-modules 28 of each chain-link module 26 must be coordinated in order to provide the aforementioned power transfer functionality and typically this carried out by respective control modules, each of which controls a given chain-link component, e.g. a given chain-link module 26. Such a control module may, however, also control more than one chain-link module 26, or it may control one or more other chain-link components in the form of a plurality of individual chain-link sub-modules 28 which may or may not be arranged within one or more chain-link modules 26.

According to a first aspect of the invention there is provided a control module, for controlling a chain-link component of a converter, comprising two controllers, each controller being configured to selectively control a chain-link component in accordance with a control program stored in the said controller, the control module being configured to replace the control program stored in one of the controllers with a replacement control program while the other of the controllers is controlling the chain-link component.

Such an arrangement allows the control module to continue controlling the chain-link component, i.e. a chain-link module or a chain-link sub-module thereof, and thereby allow the converter of which the chain-link component is a part to also continue to operate so as to keep in place the control and protection features associated with the converter, while permitting a change to the operation of the chain-link component to be implemented, e.g. by replacing the control program used by one or both of the controllers of the control module to control the chain-link component.

Moreover, such a change to the operation of the chain-link component, i.e. replacing of the control program, can be carried out over an unrestricted timescale. This is not the case if, for example, replacing the control program must be carried out after the opening of circuit breakers to isolate the converter but before the energy storage devices, i.e. capacitors, in the chain-link component of interest discharge. Furthermore, the benefits of being able to carry out control program replacement over an unrestricted timescale are manifest as follows:
- no limit on the future size (and associated replacement time) of a replacement control program; and
- the ability to make multiple attempts to replace the control program in an effort to avoid the need to manually replace the control program in a controller and incur the significant attendant downtime occasioned by the resulting requirement for physical access by a human operator to the converter.

In addition, the inclusion of two controllers, both of which is able to control the chain-link component, provides the option of allowing one controller to take over control of the chain-link component if the other controller develops a fault.

Preferably the control module is further configured to selectively designate one of the controllers as an active controller which while so designated controls the chain-link component and the other of the controllers as a standby controller which while so designated does not control the chain-link component.

The inclusion of a control module so configured permits autonomous operation of the control module, e.g. without the need for recourse to a higher level controller.

Optionally the active controller while so designated is configured to replace the control program stored in the standby controller.

Such a feature similarly helps to permit the control module to operate autonomously.

Each controller may be configured when first powered up to retrieve a designation code indicating whether the controller is initially at least to be designated as an active controller or a standby controller.

The automatic retrieval of a designation code by each controller on first power up still further assists the control module to operate autonomously.

Optionally the control module additionally includes a storage device configured to store a control program, and the active controller while so designated is further configured to store a replacement control program in the storage device before replacing the control program stored in the standby controller with the said replacement control program.

The inclusion of a storage device provides a repository, which may be temporary, for a replacement control program, and thereby provides an opportunity for the replacement control program (which may have been received over a communication network and therefore been susceptible to corruption) to be verified before it replaces the control program stored in the standby controller.

In a preferred embodiment of the invention the control module includes two storage devices each of which is configured to store a control program and each of which is primarily associated with one of the controllers.

The inclusion of two storage devices, each of which is primarily associated with a given controller, provides the control module with a degree of symmetry which helps to allow each controller to run an identical control program, and thereby readily permit either controller to be designated, as required, as the active controller.

Preferably the active controller while so designated is configured to store the replacement control program in the storage device primarily associated with the standby controller before replacing the control program stored in the standby controller with the said replacement control program.

Such a feature permits the control module to, e.g. verify the replacement control program, in an autonomous manner.

In another preferred embodiment of the invention the or each storage device is operably connected with both controllers.

Operably connecting the or each storage device with both controllers allows one controller to write, e.g. a replacement control program, to a storage device and the replacement control program to then be uploaded to the other controller (to replace the control program stored therein) and vice versa, to thereby permit either controller to be designated as the active controller.

Optionally the control module further includes an interface module which arranges the two controllers in communication with a hardware control unit that directly controls the chain-link component, and which permits only the active controller while so designated to communicate with the hardware control unit.

Such an arrangement ensures that both controllers have the ability to communicate with the hardware control unit so that either controller can be designated as the active controller, but that only one controller, i.e. the active controller, can communicate at any particular moment in order to avoid any erroneous or inadvertent control of the chain-link component by the other controller, i.e. the standby controller.

In addition, the inclusion of such an interface module means that correct operation of the other controller, i.e. the standby controller, can be verified, e.g. following the replacement of its control program with another updated replacement control program, while the other controller is isolated from the hardware control unit, i.e. unable to communicate with hardware control unit, and so cannot adversely affect operation of the chain-link component if, for example, the replacement control program was defective in some way.

The interface module may additionally arrange the two controllers in communication with a higher level controller while permitting only the active controller while so designated to communicate fully with the higher level controller.

In this manner both controllers are able to receive information from the higher level controller, such as a replacement control program, but only one controller, i.e. the active controller, is able to selectively transmit information to the higher level controller, such as whether a replacement control program and/or subsequent operation of the other controller, e.g. the standby controller, following the replacement of its control program, has been satisfactorily verified.

In a still further preferred embodiment of the invention each controller includes a respective transmission detector through which it is arranged in communication with the interface module, each transmission detector being configured to detect passage of a transmit signal to the interface module by its corresponding controller and thereafter send an initiating transmission signal to the interface module whereby the interface module permits the transmitting controller to communicate therethrough while simultaneously blocking communication by the other controller.

The inclusion of such respective transmission detectors permits each controller, as required, to establish a communication path between it and at least the hardware control unit in a manner which requires no external input and so can be carried out autonomously.

Preferably each controller is configured when first powered up and if thereafter designated initially at least as the active controller to periodically attempt communication through the transmission detector thereof, whereby the said transmission detector is triggered to send the initiating transmission signal to the interface module and the interface module thereafter permits the active controller to communicate therethrough.

Such an arrangement allows the designated active controller to automatically initiate a communication path through the interface module when the control module is first powered up, and thereby helps to define a default configuration for the control module which is repeatable on each and every occasion the control module is powered up.

Optionally the interface module is configured on receipt of a negated transmit enable signal to temporarily block any communication with the higher level controller.

Temporarily blocking any communication with the higher level controller in this manner helps to prevent any extraneous communication from the active controller reaching the higher level controller or any other device it may be in communication with.

In a further preferred embodiment of the invention each controller is configured when first powered up and if thereafter designated initially at least as the standby controller to check for attempted communication by the other active controller, and in the absence of such a communication attempt itself periodically to communicate through the transmission detector thereof, whereby the said transmission detector thereof is triggered to send an initiating transmission signal to the interface module and the interface module thereafter permits the standby controller to communicate therethrough.

Configuring each controller in the foregoing manner permits the initially designated standby controller to take over control of the chain-link component, i.e. to become designated as the active controller, in the event of there being a fault with the initially designated active controller.

Preferably the designated standby controller is configured to monitor the output of the transmission detector of the designated active controller and to take over as active controller in the event of the said transmission detector of the designated active controller having no output.

Such an arrangement helps to ensure continued, uninterrupted control of the associated chain-link component and, as a result, continued and uninterrupted operation of the converter of which the chain-link component forms a part.

According to a second aspect of the invention there is provided a converter comprising a control module as described hereinabove.

The aforementioned converter shares the advantages associated with the corresponding features of the control module of the invention.

There now follows a brief description of preferred embodiments of the invention, by way on non-limiting example, with reference being made to the following figures in which:
Figure 1 shows a schematic view of a voltage source converter; and
Figure 2 shows a schematic view of a control module according to a first embodiment of the invention.

A control module according to a first embodiment of the invention is designated generally by reference numeral 40.

The control module 40 includes two controllers in the form of first and second controllers 42, 44. In the embodiment shown each controller is a programmable logic device, and more particularly a Field Programmable Gate Array (FPGA). One example of such a FPGA is Microsemi Corporation's IGL002 device, although other programmable logic devices may also be used.

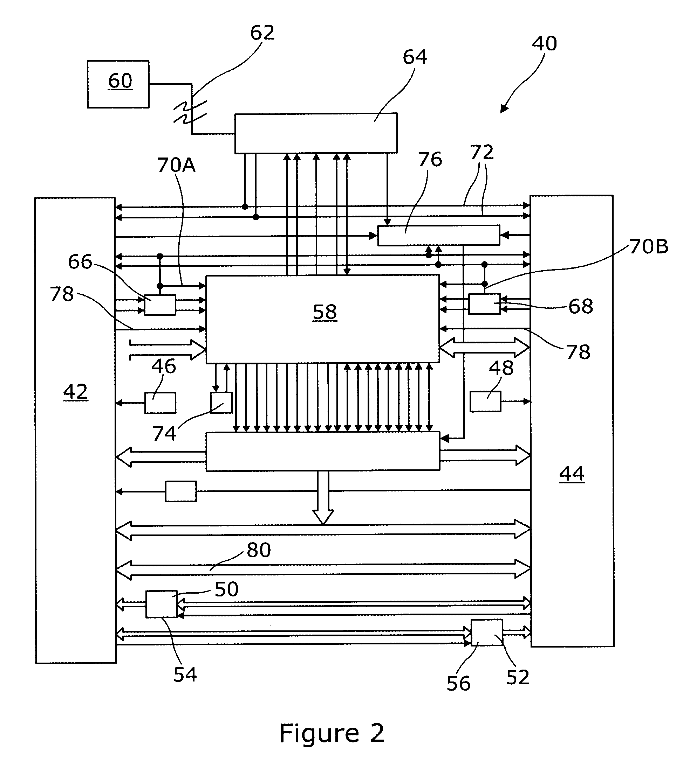

The first and second controllers 42, 44 are chosen to be identical to one another. In addition, the external connections (only shown schematically in Figure 2) made between each controller 42, 44 and other elements of the control module 40, e.g. as described hereinbelow, are also identical to one another so as to allow each controller 42, 44 to run exactly the same control program.

In this latter regard, each controller 42, 44 is configured to selectively control a chain-link component, such as one of the chain-link modules 26 in the converter 10 shown in Figure 1, in accordance with a control program which is stored in the said controller 42, 44. In other embodiments of the invention each controller 42, 44 may instead be configured to selectively control a plurality of chain-link modules 26, or one or more chain-link sub-modules 28 which may or may not be arranged within one or more chain-link modules 26.

In still further embodiments of the invention, each of the first and second controllers 42, 44 may take the form of a processor, such as a microprocessor or microcontroller, which functions in accordance with an associated software control program.

The control module 40 generally is configured to replace the control program stored in one of the controllers 42, 44 with a replacement control program while the other of the controllers 42, 44 is controlling the chain-link component (26, 28) as set out above. Further details of how the control module 10 is so configured to carry out such replacement of a control program is described below.

More particularly, the control module 40 is configured to selectively designate one of the controllers 42, 44 as an active controller which, while the active controller is so designated, controls the chain-link component (26, 28). The active controller is also, while so designated, configured to replace the control program stored in the standby controller. The control module 40 is still further configured to selectively designate the other of the controllers 42, 44 as a standby controller which, while the standby controller is so designated, does not control the chain-link component (26, 28).

In terms of the control module 40 selectively designating active and standby controllers, each controller 42, 44 is configured when first powered up, i.e. when first turned on, to retrieve a designation code, such as a printed circuit board (PCB) track coding. The designation code indicates whether the controller 42, 44 is initially at least to be designated as an active controller or a standby controller. In the embodiment shown each controller 42, 44 retrieves the designation code from a corresponding first or second identifier unit 46, 48 and, by way of example, the first controller 42 retrieves a designation code indicating that initially it is to be designated as the active controller while the second controller 44 retrieves a designation code indicating that initially it is to be designated as the standby controller. As such the first controller 42 is normally designated as the active controller while the second controller 44 is normally designated as the standby controller.

The control module 40 also includes first and second storage devices 50, 52 each of which is primarily associated with the corresponding first or second controller 42, 44. In the embodiment shown the storage devices 50, 52 are identical to one another, with each being a memory device in the form of a Serial Peripheral Interface Bus (SPI) flash memory device. Other types of storage device are also possible however.

The active first controller 42, while so designated, is configured to store a replacement control program in the storage device primarily associated with the standby second controller 44, i.e. store a replacement control program in the second storage device 52, before replacing the control program stored in the standby second controller 44 with the said replacement control program.

More particularly, each storage device 50, 52 is operably connected with both controllers 42, 44. Such operable interconnection is, in the embodiment shown, provided by a corresponding first or second interface module 54, 56 in the form of a first or second multiplexer. Each of the first and second multiplexers is a Texas Instruments Incorporated TS3L501 E multiplexer, although other interface modules may also be used.

The inclusion of such first and second interface modules 54, 56 allows one controller 42, 44 to write, e.g. a replacement control program, to the storage device 50, 52 of the other controller 42, 44 and for the replacement control program to then be uploaded to the other controller 42, 44 to replace the existing control program stored in that other controller 42, 44, and vice versa.

The control module 40 also includes a third interface module 58 which arranges the first and second controllers 42, 44 in communication with a hardware control unit (not shown) that directly controls, e.g. the chain-link component (26, 28). The hardware control unit may, for example, take the form of a control PCB.

The third interface module 58 is, in the embodiment shown, again a Texas Instruments Incorporated TS3L501 E multiplexer although another interface module may also be used such as, for example, a Semiconductor Components Industries, LLC NCC7201 interface module which is marketed under its ON Semiconductor® brand.

In any event, the third interface module 58 permits only the active controller 42, 44, while so designated, to communicate with the hardware control unit.

The third interface module 58 also arranges the two controllers 42, 44 in communication with a higher level controller 60. Such communication with the higher level controller 60 is, in the embodiment shown, achieved via a passive optical network (PON) 62 and an associated optical transceiver 64. Other communication arrangements may also be employed however.

The third interface module 58 permits only the active controller 42, 44, while so designated, to communicate fully with the higher level controller 60. More particularly, the third interface module 58 allows only the active controller 42, 44 to transmit information to the higher level controller 60.

Such a restriction in the communication of the controllers 42, 44 with the hardware control unit and the higher level controller 60, i.e. with only the designated active controller being able to communicate with the hardware control unit and transmit information to the higher level controller 60, is implemented as follows.

Each controller 42, 44 includes a respective first or second transmission detector 66, 68 through which it is arranged in communication with the third interface module 58.

Each transmission detector 66, 68 is configured to detect a transmit signal TX+, TX- being passed to the third interface module 58 by its corresponding controller 42, 44, such that the third interface module 58 thereafter permits the transmitting controller to communicate through the third interface module 58 while simultaneously blocking communication by the other controller.

More particularly, each controller 42, 44 is configured when first powered up, and if thereafter designated (at least initially) as the active controller, to periodically attempt to communicate through the corresponding transmission detector 66, 68 thereof. Such communication attempts trigger the corresponding transmission detector 66, 68 to send an initiating transmission signal 70A, 70B to the third interface module 58 and the third interface module 58 thereafter permits the active controller to communicate therethrough.

In a practical embodiment, as shown, the communication attempts by the designated active controller take the form of periodic inconsequential messages which are sent at a rate sufficient to trigger the associated transmission detector 66, 68. Moreover, the initiating transmission signal 70A, 70B sent by the said associated transmission detector 66, 68 takes the form of a logic high signal. When either controller 42, 44 is transmitting the inconsequential messages, in order to trigger the associated transmission detector 66, 68, it preferably negates a transmit enable signal 78 such that the third interface module 58 temporarily blocks transmission of the inconsequential messages to the higher level controller 60.

Accordingly, the third interface module 58 is arranged to allow whichever controller 42, 44 is attempting to communicate, or is actually communicating, via its associated transmission detector 66, 68 (with the associated transmission detector 66, 68 in turn thereby sending an initiating transmission signal 70A, 70B, i.e. a logic high signal, to the third interface module 58) to communicate, i.e. transmit, through the third interface module 58.

In addition, in the event of a fault arising such that both transmission detectors 66, 68 are sending an initiating transmission signal, i.e. a logic high signal, to the third interface module 58, the third interface module 58 will default to allowing only the first controller 42 to communicate through the third interface module 58, i.e. the third interface module 58 will, by default, effectively designate the first controller 42 as the active controller by allowing only its communications to be exchanged with each of the hardware control unit and the higher level controller 60.

The first and second controllers 42, 44 are also arranged in direct communication with one another, via a control and data bus 80. In the embodiment shown both of the first and second controllers 42, 44 are also arranged to receive information from the higher level controller 60 via the optical transceiver 64 and a common communication line 72.

Each controller 42, 44 is additionally configured when first powered up, and if thereafter designated initially at least as the standby controller, to check for attempted communication by the other controller 42, 44, i.e. the other designated active controller. Such checking is carried out by monitoring for an initiating transmission signal 70A, 70B from the corresponding transmission detector 66, 68. In the absence of any such communication attempt by the designated active controller the designated standby controller is configured to itself periodically attempt to communicate through its corresponding transmission detector 66, 68 whereby the said transmission detector 66, 68 thereof is triggered to send an initiating transmission signal 70A, 70B, i.e. a logic high signal, to the third interface module 58 such that the third interface module 58 thereafter permits the standby controller to communicate therethrough.

In addition to the foregoing the third interface module 58 is arranged in communication with a passcode store 74 which contains a passcode that is unique to the control module 40 and identifies it to the higher level controller 60. In the embodiment shown the passcode takes the form of a 48bit serial number that uniquely identifies the hardware control unit of interest, although other types of passcode are also possible. The third interface module 58 is also configured in such a way that it gives access to the passcode store 74 to the controller 42, 44 designated as the active controller.

In the foregoing manner, each controller 42, 44 is, when suitably able to communicate through the third interface module 58, able to obtain and utilise the passcode which subsequently permits the said controller 42, 44 uniquely to communicate with the higher level controller 60.

The control module 40 also includes a watchdog unit 76 which monitors the output, i.e. the initiating transmission signal 70A, 70B, of each transmission detector 66, 68, the various outputs of each controller 42, 44, various power supplies (omitted from the diagram) and a power detection signal for a laser within the optical transceiver 64. The purpose of such a watchdog unit 76 is to monitor for malfunctions and in the event of both controllers 42, 44 failing, or there being a problem with a power supply or the optical transceiver 64, cause the chain-link component 26, 28 being controlled to adopt a safe state.

In use the control module operates as follows.

When first powered up each of the first and second controllers 42, 44 retrieves a designation code from a corresponding identifier unit 46, 48.

The designation code retrieved by the first controller 42 identifies it as the active controller, i.e. the controller which is to actually carry out the control of an associated chain-link component, e.g. a chain-link module 26 or one or more chain-link sub-modules 28. In the meantime the designation code retrieved by the second controller 44 identifies it as the standby controller (which is not to perform any control of the said chain-link component 26, 28).

Thereafter the active first controller 42 looks to retrieve the passcode from the passcode store 74 to allow it, in due course, to uniquely establish full communication, i.e. transmit and receive, with the higher level controller 60.

In order to retrieve the passcode the active first controller 42 must first establish communication via the third interface module 58, and to do this it periodically sends inconsequential messages via its associated first transmission detector 66. This transmission stream triggers the first transmission detector 66 to send an initiating transmission signal 70A, i.e. a logic high signal, to the third interface module 58 which, in turn, opens up communication with the active first controller 42. The first active controller 42 additionally negates, i.e. sends low, its transmit enable signal 78 to the third interface module 58 in order, temporarily, to block transmissions of the active first controller 42 from reaching the higher level controller 60, so as to thereby avoid transmission of the inconsequential messages.

At the same time, by way of a check on whether the active first controller 42 is functioning correctly, the standby second controller 44 checks, via monitoring of the initiating transmission signal 70A of the first transmission detector 66, whether a given number of communication attempts by the active first controller 42 are made within a defined period of time. If the necessary active first controller 42 communication attempts are not detected by the standby second controller 44 it will instead itself attempt communication with the third interface module 58. The standby second controller 44 does this by periodically sending its own inconsequential messages via the second transmission detector 68, such that the resulting transmission stream triggers the second transmission detector 68 to send its own initiating transmission signal 70B, i.e. a logic high signal, to the third interface module 58 which, in turn, then opens up communication instead with the standby second controller 44.

Thereafter the second controller 44 becomes the active controller as it subsequently becomes able to communicate with each of the hardware control unit and the higher level controller 60, so as to effect the required control over the associated chain-link component (26, 28). The aforementioned failure of the first controller 42 can then be reported to the higher level controller 60.

Alternatively, if the standby second controller 44 mistakenly attempts to intervene while the active first controller 42 is actually functioning correctly, the configuration of the third interface module 58 ensures that control is not inadvertently passed to the standby second controller 44, i.e. the standby second controller 44 is not erroneously designated as the active controller. In such circumstances the incorrect attempt by the standby second controller 44 is recognised by the correct active first controller 42 which can thereafter report the faulty standby second controller 44 to the higher level controller 60.

Following the foregoing possible powering up sequences the control module 40 adopts a normal operating mode. In such a mode both controllers 42, 44 have pre-stored therein identical control programs but the first controller 42 is designated as the active controller and so communicates with the hardware control unit to control the associated chain-link component 26, 28.

The standby second controller 44 monitors the initiating transmission signal 70A from the first transmission detector 66 to check whether the active first controller 42 is communicating as it should via the third interface module 58. In the event of the standby second controller 44 detecting no such initiating transmission signal 70A, i.e. detecting a logic low (e.g. zero) signal, the standby second controller 44 takes over as active controller so as to maintain uninterrupted control of the associated chain-link component 26, 28.

As well as such a normal operating mode, the control module 40 is also able to adopt an updating mode. In such a mode the active first controller 42 receives, over the passive optical network 62, a replacement control program from the higher level controller 60.

In this regard both the active first controller 42 and the standby second controller 44 is able, by virtue of the common communication line 72, to receive such a replacement control program from the higher level controller 60. However, given that only the active first controller 42 is able additionally to transmit information back to the higher level controller 60 (because only the active first controller 42 is able to communicate fully through the third interface module 58) it is considered preferable that it be the active first controller 42 which receives the said replacement control program since it permits the outcome of the verification steps set out below to be relayed to the higher level controller 60.

Following receipt of the replacement control program by the active first controller 42 it stores the replacement control program in the second storage device 52 which is primarily associated with the standby second controller 44, i.e. the active first controller 42 writes the replacement control program to the second flash memory device.

The active first controller 42 then verifies the integrity of the stored replacement control program and communicates this outcome to the higher level controller 60.

Once the replacement control program has been stored correctly the active first controller 42 instructs the standby second controller 44 to reprogram itself by uploading the stored replacement control program from the second storage device 52 into its own internal program store. The active first controller 42 carries out such an instruction and replaces the control program stored in the standby second controller 44 while it, the active first controller 42, continues to control the associated chain-link component 26, 28.

The active first controller 42 then monitors the operation of the reprogrammed standby second controller 44, e.g. by allowing the standby second controller 44 to run the replacement control program in response to received information and commands but while being isolated from the hardware control unit by the third interface module 58. Such operation of the reprogrammed standby second controller 44 can be evaluated by the active first controller 42, or details of the operation can be sent by the active first controller 42 to the higher level controller 60 for remote evaluation. In other embodiments of the invention, however, the active first controller 42 need not necessarily carry out the aforementioned verification step.

Either way, once operation of the reprogrammed standby second controller 44 has been verified or in any event if no verification is undertaken, the active first controller 42 rescinds its designation as active controller and the standby second controller 44 instead becomes the active controller and takes over control of the associated chain-link component 26, 28.

Thereafter the foregoing reprogramming process is repeated in order to reprogram the first (now standby) controller 42.

## Claims

1. A control module, for controlling a chain-link component of a converter, comprising two controllers, each controller being configured to selectively control a chain-link component in accordance with a control program stored in the said controller, the control module being configured to replace the control program stored in one of the controllers with a replacement control program while the other of the controllers is controlling the chain-link component.

2. A control module according to Claim 1 wherein the control module is further configured to selectively designate one of the controllers as an active controller which while so designated controls the chain-link component and the other of the controllers as a standby controller which while so designated does not control the chain-link component.

3. A control module according to Claim 2 wherein the active controller while so designated is configured to replace the control program stored in the standby controller.

4. A control module according to Claim 2 or Claim 3 wherein each controller is configured when first powered up to retrieve a designation code indicating whether the controller is initially at least to be designated as an active controller or a standby controller.

5. A control module according to any of claims 2 to 4 additionally including a storage device configured to store a control program, and wherein the active controller while so designated is further configured to store a replacement control program in the storage device before replacing the control program stored in the standby controller with the said replacement control program.

6. A control module according to Claim 5 including two storage devices each of which is configured to store a control program and each of which is primarily associated with one of the controllers.

7. A control module according to Claim 6 wherein the active controller while so designated is configured to store the replacement control program in the storage device primarily associated with the standby controller before replacing the control program stored in the standby controller with the said replacement control program.

8. A control module according to any of Claims 5 to 7 wherein the or each storage device is operably connected with both controllers.

9. A control module according to any of Claims 2 to 8 further including an interface module which arranges the two controllers in communication with a hardware control unit that directly controls the chain-link component, and which permits only the active controller while so designated to communicate with the hardware control unit.

10. A control module according to Claim 9 wherein the interface module additionally arranges the two controllers in communication with a higher level controller while permitting only the active controller while so designated to communicate fully with the higher level controller.

11. A control module according to Claim 9 or Claim 10 wherein each controller includes a respective transmission detector through which it is arranged in communication with the interface module, each transmission detector being configured to detect passage of a transmit signal to the interface module by its corresponding controller and thereafter send an initiating transmission signal to the interface module whereby the interface module permits the transmitting controller to communicate therethrough while simultaneously blocking communication by the other controller.

12. A control module according to Claim 11 wherein each controller is configured when first powered up and if thereafter designated initially at least as the active controller to periodically attempt communication through the transmission detector thereof, whereby the said transmission detector is triggered to send the initiating transmission signal to the interface module and the interface module thereafter permits the active controller to communicate therethrough.

13. A control module according to Claim 12 wherein the interface module is configured on receipt of a negated transmit enable signal to temporarily block any communication with the higher level controller.

14. A control module according to any of Claims 11 to 13 wherein each controller is configured when first powered up and if thereafter designated initially at least as the standby controller to check for attempted communication by the other active controller, and in the absence of such a communication attempt itself periodically to communicate through the transmission detector thereof, whereby the said transmission detector thereof is triggered to send an initiating transmission signal to the interface module and the interface module thereafter permits the standby controller to communicate therethrough.

15. A control module according to any of Claims 11 to 14 wherein the designated standby controller is configured to monitor the output of the transmission detector of the designated active controller and to take over as active controller in the event of the said transmission detector of the designated active controller having no output.

16. A converter comprising a control module according to any preceding claim.
